# EUROPÄISCHE PATENTSCHRIFT

(11) **EP 1 429 060 B1**
(45) Veröffentlichungstag und Bekanntmachung des Hinweises auf die Patenterteilung: **11.04.2007**
(21) Anmeldenummer: 02027869.3
(22) Anmeldetag: 13.12.2002
(51) Int. Cl.: F16K 17/28, F16K 17/30, F04B 53/10, F04C 29/12

(54) **Auslassventil für Kompressor**
Outlet valve for compressor
Valve de décharge pour compresseur

(43) Veröffentlichungstag der Anmeldung: 16.06.2004
(73) Patentinhaber: Continental Aktiengesellschaft, 30165 Hannover (DE)
(72) Erfinder: Folchert, Uwe, Dr., 31667 Lauenau (DE); Sorge, Kal, Dr., 31615 Wunstorf (DE); Westerkamp, Helge, 30953 Hemmingen (DE)

(56) Entgegenhaltungen:
- EP-A- 0 834 654
- DE-A- 2 625 057
- DE-B- 1 259 158
- FR-A- 671 526
- US-A- 2 598 216
- US-A- 4 542 768
- US-A- 5 947 708
- PATENT ABSTRACTS OF JAPAN vol. 010, no. 122 (M-476), 7. Mai 1986 (1986-05-07) -& JP 60 249692 A (TOSHIBA KK), 10. Dezember 1985 (1985-12-10)

## Beschreibung

### Anwendungsgebiet

Die Erfindung betrifft ein Lamellenventil - insbesondere ein Auslassventil für einen Kompressor - nach dem Oberbegriff des Anspruchs 1.

### Stand der Technik

Ein Lamellenventil mit den im Oberbegriff des Anspruchs 1 genannten Merkmalen wird in der US Druckschrift US2598216 beschrieben. Aus der US2598216 ist ein Lamellenventil bekannt, wobei das Lamellenventil aus einer Ventilplatte und einer Ventillamelle besteht. Die Ventilplatte ist mit einem Ventilsitz nebst Ventilöffnung versehen. Die Ventillamelle weist weiterhin eine Ventilzunge auf, die über mindestens einen flexiblen Lenker mit einem an der Ventilplatte befestigten Lamellenteil verbunden ist. Die Ventilzunge der Ventillamelle deckt die Ventilöffnung im drucklosen Zustand flexibel ab und der Ventilsitz ist gegenüber der Ventilplatte erhaben.

Weiterhin ist aus der deutschen Patentschrift DE 23 57 899 C2 ein Lamellenventil bekannt, wobei die auf einem Ventilsitz angeordnete Verschlussplatte elastische Zungen aufweist, welche die Ventilöffnungen abdecken. Jeweils ein Ende der Zungen ist frei beweglich, während die jeweils anderen Enden der Zungen durch einen querverlaufenden Verbindungssteg miteinander verbunden sind. An diesen Verbindungssteg schließen sich flexible Lenker an. Die dem Verbindungssteg gegenüberliegenden Enden der flexiblen Lenker sind auf einer Sitzplatte befestigt.
Bei Druckbeaufschlagung heben die Ventilzungen (Ventillamellen) nicht nur an jeweils einem Ende sondern ganzflächig ab und geben die jeweiligen Ventilöffnungen frei. Dabei nehmen die Ventilzungen, die Lenker und die Sitzplatte - von der Seite betrachtet - eine etwa z-förmige Gestalt an.
Im drucklosen Zustand fallen die Ventilzungen zurück; eine Schließkraft ist im drucklosen Zustand nicht vorhanden.

### Aufgabe der Erfindung

Die Aufgabe der Erfindung besteht darin, ein Lamellenventil der eingangs genannten Art derart weiterzubilden, dass auch im drucklosem Zustand eine vorgegebene Schließkraft gewährleistet ist. Die Aufgabe der Erfindung besteht weiterhin darin, ein bei großer Durchtrittsöffnung trägheitsarm wirkendes Auslassventil kostengünstig darzustellen.

### Lösung und Vorteile

Gemäß Anspruch 1 ergibt sich die gewünschte Schließkraft dadurch, dass der Ventilsitz gegenüber der Ventilplatte erhaben ist, d. h. dass der Ventilsitz aus der ansonsten ebenen Ventilplatte herausragt. Um im drucklosen Zustand eine Schließkraft zu gewährleisten, ist somit kein zusätzliches Bauteil, wie z. B. Spiralfeder, erforderlich.
Wegen der z-förmigen Auslenkbarkeit der Lamelle, kann sich die Zunge auch einem etwas geneigten Ventilsitz optimal anpassen. Ein präzise geschliffener Neigungswinkel des Ventilsitzes, wie für eine einfaches Zungenventil zur Erzeugung einer Schließkraft unumgänglich, ist hier nicht erforderlich,. d. h.: gewisse Fertigungstoleranzen sind erlaubt.

Darüber hinaus kann die Größe der auf die Lamelle wirkenden Schließkraft durch eine Höhenverstellung des Ventilsitzes verändert werden. Durch eine größere Höhe des Ventilsitzes erhöht sich die Vorspannung der flexiblen Lamelle.

Außerdem lässt sich die Größe der Schließkraft durch die Auswahl der Federstärke beeinflussen. Mit einer größeren Federstärke erhöht sich nicht nur die Schließkraft im drucklosen Zustand sondern darüber hinaus auch die Schließkraft im ausgelenkten Zustand. Die Federstärke ist somit ein weiteres Kriterium zur Einstellung der Schließkraft.

Die Ventilzunge kann so frei gewählt werden, wie es die Ausbildung der sie umgebenden Arme erlaubt. Die Dicke der gesamten Lamelle und die Breite der Arme und der Verbindungsstege sind so gewählt, dass eine Gesamtbiegelinie entsteht, durch die der Dichtbereich am Lamellenventil durch die Luftströmung parallel von der Dichtfläche abgehoben wird. Durch die schlanken, außen angeordneten Arme wird die Spannungsbelastung der Arme gering gehalten.

Durch die parallele Bewegung entfällt eine Vorzugsabströmrichtung. Aus diesem Grunde und wegen der kreisrunden Ausbildung der Gesamtlamelle und der zum Außenumfang koaxial angeordneten Ventilzunge kann das Ventil beliebig orientiert eingebaut werden. Es gibt keine Vorzugsrichtung, die beim Einbau berücksichtigt werden müsste.
Dies wird weiterhin dadurch unterstützt, dass der Außenbereich, an den der äußere Verbindungssteg angebunden ist, ebenfalls kreisrund (oder elliptisch) ist und in etwa dem Durchmesser des Zylinderrohres entspricht und daher ohne zusätzliche Befestigungsteile zwischen Ventilplatte und Zylinderkopf eingeklemmt werden kann.

Vorzugsweise ist die Zunge (Dichtfläche) in ihrem, dem inneren Verbindungssteg gegenüberliegenden Bereich verbreitert, um die Schwerpunktlage so anzupassen, dass die Steifigkeitseinflüsse durch Massenkräfte kompensiert werden. Die genauen Abmessungen hängen von Lamellendicke, -steifigkeit und der dynamischen Druckbeaufschlagung ab.

Durch das quasi-parallele Abheben der Zunge ergibt sich schon bei geringster Auslenkung eine relativ große Durchtrittsöffnung des Ventils.
Bei größtmöglicher Auslenkung der Zunge erfolgt die Belastung auf einen außerhalb, mittig angeordneten Hubfänger gleichmäßig und ohne Gleiten.

### Zeichnungen

Im folgenden wird das erfindungsgemäße Ventil anhand eines Ausführungsbeispiels näher beschrieben. Es zeigt:
Fig. 1 einen Schnitt durch das erfindungsgemäße Ventil, von der Seite betrachtet;
Fig. 2 ebenfalls einen Schnitt durch das erfindungsgemäße Ventil, von vorne betrachtet; und
Fig. 3 die Lamelle (das Verschlussstück) des erfindungsgemäßen Ventils.

### Beschreibung

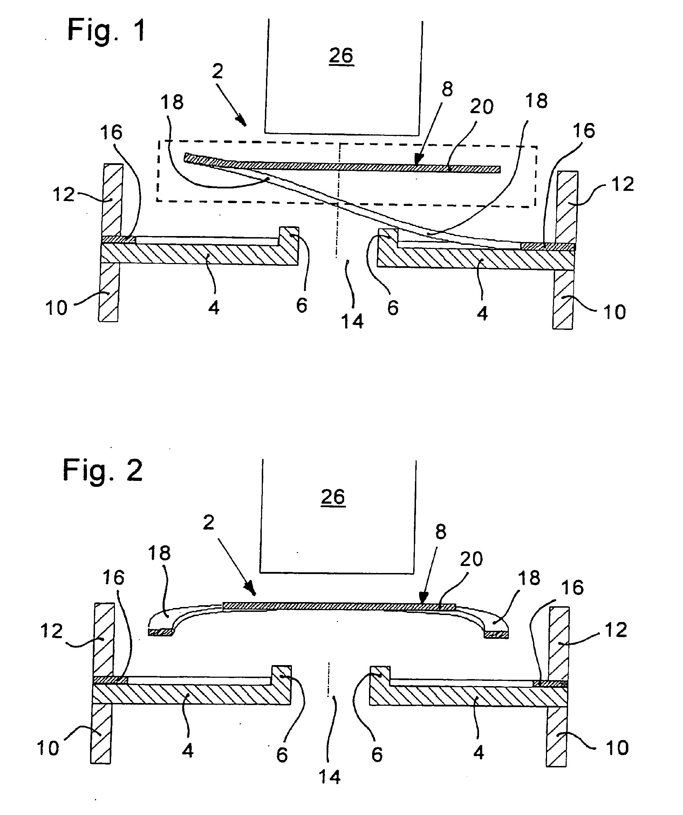

Das in Fig. 1 und Fig. 2 jeweils im Schnitt dargestellte Ventil 2 besteht im wesentlichen aus einem an einer starren Ventilplatte 4 befindlichen Ventilsitz 6 und einer an der Ventilplatte 4 angebrachten flexiblen Ventillamelle 8. Die Ventilplatte 4 ist zwischen einem Zylinderrohr 10 und einem Zylinderkopf 12 fest eingespannt.

Der Ventilsitz 6 weist eine Ventilöffnung 14 auf, die im drucklosen Zustand durch die Zunge 20 der Ventillamelle 8 flexibel abgedeckt ist.
Der Ventilsitz 6 ist gegenüber der Ventilplatte 4 erhaben, wodurch die auf der Ventilplatte 4 angebrachte, flexible Lamelle 8 bereits im geschlossenen Zustand des Ventils 2 eine gewisse Vorspannung erhält. Die Größe der Vorspannung ist außer von dem zwischen Ventilsitz 6 und restlicher Ventilplatte 4 gegebenen Höhenunterschied auch von der Ausgestaltung der flexiblen Ventillamelle 8 abhängig.

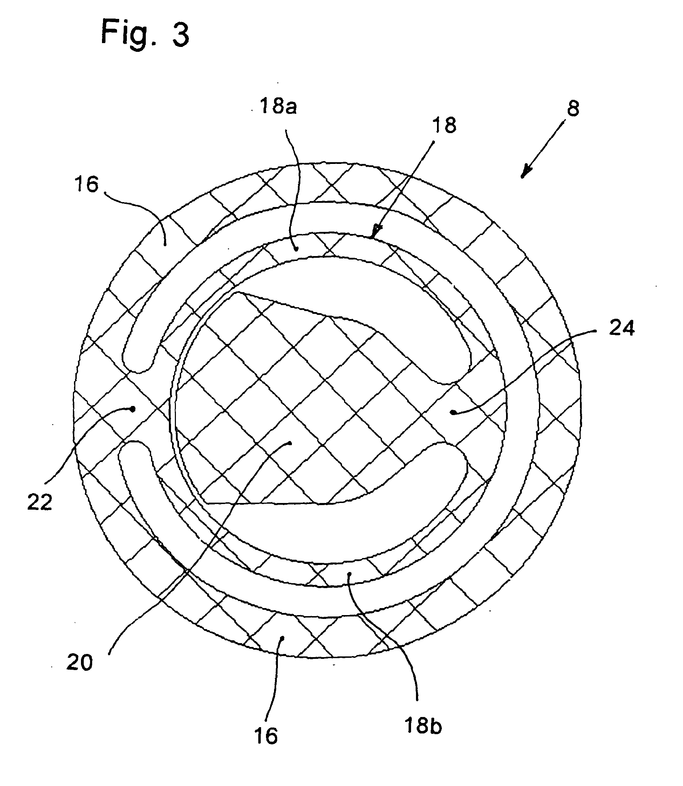

Die in Fig. 3 dargestellte Ventillamelle (Verschlussplatte) 8 besteht aus einem fest zwischen Zylinderkopf 12 und Ventilplatte 4 eingespannten Außenring 16, einem zweiarmigen Doppellenker 18 (Arme 18a, 18b) und der als Verschlussorgan dienenden Ventilzunge 20. Der Außenring 16 und der zweiarmige Doppellenker 18 sind mit unterschiedlichen Radien ringförmig ausgebildet und koaxial zueinander angeordnet.
Die beiden Arme 18a, 18b des Doppellenkers 18 sind einerseits über einen äußeren Verbindungssteg 22 mit dem Außenring 16 verbunden; in ähnlicher Weise ist die gegenüberliegende Seite des Doppellenkers 18 über einen inneren Verbindungssteg 24 mit der Ventilzunge 20 verbunden. Dabei sind die beiden Arme 18a, 18b des Doppellenkers 18 und/oder die Verbindungsstege 22, 24 flexibel ausgebildet. Die konzentrisch zu dem Doppellenker 18 angeordnete Ventilzunge 20 ist nicht kreisrund sondern weist eine spezielle Massenverteilung auf.

Erfindungsgemäß ist das Ventil 2 so gestaltet, dass die Ventillamelle 8 sowohl statisch als auch dynamisch z-förmig öffnet.
Die zwischen der Ventilzunge 20 und dem Außenring 16 angeordneten Arme 18a, 18b des Doppellenkers 18 verformen sich derartig, dass die Ventilzunge 20 aufgrund des erhabenen Ventilsitzes 6 bereits im drucklosen Zustand eine gleichmäßige Dichtkraft (Schließkraft) aufweist. Bei statisch auf die Ventilzunge 20 wirkender Last bildet die Biegelinie der aus den Armen 18a, 18b und dem äußeren Verbindungssteg 22 bestehenden Teil der Lamelle 8 einen S-Schlag, so dass die Ventilzunge 20 stets parallel zum Ventilsitz 6 bleibt.

Im dynamischen Fall wird das z-förmige Öffnen durch eine geeignete Massenverteilung der Ventilzunge 20 und der Arme 18a, 18b des Doppellenkers 18 erreicht. Dabei befindet sich der gemeinsame Trägheitsmittelpunkt von Ventilzunge 20, innerem Verbindungssteg 24 und der dem inneren Ventilsteg 24 zugewandten Hälfte der Arme 18a, 18b (d. h. der Teil der Ventillamelle 8, der sich in Fig. 1 innerhalb der gestrichelten Linie befindet) vertikal über dem Mittelpunkt der Ventilöffnung 14. Zu diesem Zweck ist die Zungenfläche in ihrem, dem inneren Verbindungssteg 24 gegenüberliegenden Bereich verbreitert. Dadurch wird die Schwerpunktlage so angepasst, dass die Steifigkeitseinflüsse durch Massenkräfte kompensiert werden. Die genauen Abmessungen hängen von Lamellendicke, -steifigkeit und der dynamischen Druckbeaufschlagung ab. Durch die schlanken, außen angeordneten Arme 18a, 18b wird die Spannungsbelastung gering gehalten.

Aufgrund eines geeigneten Schwerpunktes bzw. Trägheitsmittelpunktes von Ventilzunge 20 und Doppellenker 18 ergibt sich auch bei nichtstationärer Druckbeaufschlagung ein paralleles Abheben, so dass sich in jedem Fall eine größtmögliche Ventilöffnung bei kleinstmöglicher Auslenkung der Ventilzunge 20 ergibt. Außerdem ist die Belastung auf einen oberhalb, mittig angeordneten Hubfänger 26 gleichmäßig und ohne Gleiten.

### Bezugszeichenliste

- 2: Ventil, Lamellenventil
- 4: Ventilplatte
- 6: Ventilsitz
- 8: Ventillamelle, Verschlussplatte, Verschlussstück
- 10: Zylinderrohr
- 12: Zylinderkopf
- 14: Ventilöffnung, Durchtrittsöffnung
- 16: Außenring, Lamellenteil, Außenbereich
- 18: (Doppel-)Lenker
- 18a, 18b: Arme des Doppellenkers
- 20: Ventilzunge, Dichtfläche
- 22: (äußerer) Verbindungssteg
- 24: (innerer) Verbindungssteg
- 26: Hubfänger

## Patentansprüche

1. Lamellenventil (2), bestehend aus einer Ventilplatte (4) und einer Ventillamelle (8), wobei die Ventilplatte (4) mit einem Ventilsitz (6) nebst Ventilöffnung (14) versehen ist, und wobei die Ventillamelle (8) eine Ventilzunge (20) aufweist, die über mindestens einen flexiblen Lenker (18) mit einem an der Ventilplatte (4) befestigten Lamellenteil (16) verbunden ist, wobei die Ventilzunge (20) der Ventillamelle (8) die Ventilöffnung (14) im drucklosen Zustand flexibel abdeckt und der Ventilsitz (6) gegenüber der Ventilplatte (4) erhaben ist, und die Ventilzunge (20) der auf der Ventilplatte (4) befestigten Lamelle (8) im geschlossenen Zustand eine gewisse Vorspannung erhält.
**dadurch gekennzeichnet, dass**
der mindestens eine Lenker (18) der Ventillamelle (8) ein zweiarmiger, die konzentrische Ventilzunge (20) umgebender Doppellenker ist, dessen Arme (18a 18b) einerseits über einen äußeren Verbindungssteg (22) mit einem an der Ventilplatte (4) befestigten Außenring (16) und andererseits über einen inneren Verbindungssteg (24) mit der Ventilzunge (20) verbunden sind.

2. Lamellenventil (2) nach Anspruch 1,
**dadurch gekennzeichnet, dass**
die Höhendifferenz zwischen Ventilsitz (6) und Einspannung der Lamelle (8) einstellbar ist.

3. Lamellenventil (2) nach Anspruch 1 oder 2,
**dadurch gekennzeichnet, dass**
die Schließkraft durch Auswahl der von Dicke und Material der Lamelle (8) abhängigen Federstärke einstellbar ist.

4. Lamellenventil (2) nach einem der Ansprüche 1 bis 3,
**dadurch gekennzeichnet, dass**
die Flexibilität der Arme (18a, 18b) und/oder der Verbindungsstege (22, 24) so ausgebildet ist, dass - unter statischer Last - die Biegelinie der ausgelenkten Arme (18a, 18b) mit dem äußeren Verbindungssteg (22) einen S-Schlag bildet und die Ventilzunge (20) stets parallel zum Ventilsitz (6) bleibt.

5. Lamellenventil (2) nach einem der Ansprüche 1 bis 4,
**dadurch gekennzeichnet, dass**
die Massen und Momente von Zunge (20) und Armen (18a, 18b) so verteilt sind, dass sich der gemeinsame Trägheitsmittelpunkt von Ventilzunge (20), innerem Verbindungssteg (24) und der dem inneren Verbindungssteg (24) zugewandten Hälften der Arme (18a, 18b) vertikal über dem Mittelpunkt der Ventilöffnung (14) befindet.

6. **Lamellenventil (2) nach einem der Ansprüche 1 bis 5.**
**dadurch gekennzeichnet, dass**
das Lamellenventil (2) ein Auslassventil für einen Kompressors ist.

## Claims

1. Lamellar valve (2), composed of a valve plate (2) and a valve lamella (8), the valve plate (4) being provided with a valve seat (6) together with a valve opening (14), the valve lamella (8) having a valve tongue (20) which is connected via at least one flexible tie (8) to a lamellar part (16) which is attached to the valve plate (4), the valve tongue (20) of the valve lamella (8) covering the valve opening (14) in the pressureless state and the valve seat (6) being raised with respect to the valve plate (4) and the valve tongue (20) of the lamella (8) which is attached to the valve plate (4) being provided with a certain degree of bias in the closed state,
**characterized in that** the at least one tie (18) of the valve lamella (8) is a two-arm double tie which surrounds the concentric valve tongue (20) and whose arms (18a, 18b) are connected on the one hand via an external connecting web (22) to an external ring (16) which is attached to the valve plate (4), and on the other hand via an internal connecting web (24) to the valve tongue (20).

2. Lamellar valve (2) according to Claim 1,
**characterized in that** the difference in height between the valve seat (6) and point where the lamella (8) is clamped in is adjustable.

3. Lamellar valve (2) according to Claim 1 or 2,
**characterized in that** the closing force can be adjusted by selecting the spring strength dependent on the thickness and material of the lamella (8).

4. Lamellar valve (2) according to one of Claims 1 to 3,
**characterized in that** the flexibility of the arms (18a, 18b) and/or of the connecting webs (22, 24) is configured such that, under a static load, the bending line of the deflected arms (18a, 18b) forms a S shape with the external connecting web (22), and the valve tongue (20) always remains parallel to the valve seat (6).

5. Lamellar valve (2) according to one of Claims 1 to 4,
**characterized in that** the masses and moments of the tongue (20) and arms (18a, 18b) are distributed in such a way that the entire inertial centre point from the valve tongue (20), internal connecting web (24) and the halves of the arms (18a, 18b) facing the internal connecting web (24) is located vertically above the centre point of the valve opening (14).

6. Lamellar valve (2) according to one of Claims 1 to 5,
**characterized in that** the lamellar valve (2) is an outlet valve for a compressor.

## Revendications

1. Soupape à lamelle (2) constituée d'un plateau de soupape (4) et d'une lamelle de soupape (8), le plateau de soupape (4) étant pourvu d'un siège de soupape (6) à côté de l'ouverture de soupape (14), et la lamelle de soupape (8) présentant une langue de soupape (20) qui est connectée par le biais d'au moins un bras oscillant flexible (18) à une partie de lamelle (16) fixée au plateau de soupape (4), la langue de soupape (20) de la lamelle de soupape (8) recouvrant de manière flexible l'ouverture de soupape (14) dans l'état non pressurisé et le siège de soupape (6) étant rehaussé par rapport au plateau de soupape (4) et la langue de soupape (20) de la lamelle (8) fixée sur le plateau de soupape (4) acquérant une certaine précontrainte dans l'état fermé,
**caractérisée en ce que**
l'au moins un bras oscillant (18) de la lamelle de soupape (8) est un double bras oscillant à deux bras entourant la langue de soupape (20) de manière concentrique, dont les bras (18a, 18b) sont connectés d'une part par le biais d'une nervure de connexion extérieure (22) à une bague extérieure (16) fixée au plateau de soupape (4) et d'autre part par le biais d'une nervure de connexion intérieure (24) à la langue de soupape (20).

2. Soupape à lamelle (2) selon la revendication 1,
**caractérisée en ce que**
la différence de hauteur entre le siège de soupape (6) et la fixation de la lamelle (8) est ajustable.

3. Soupape à lamelle (2) selon la revendication 1 ou 2,
**caractérisée en ce que**
la force de fermeture peut être ajustée par un choix de la force de ressort dépendant de l'épaisseur et du matériau de la lamelle (8).

4. Soupape à lamelle (2) selon l'une quelconque des revendications 1 à 3,
**caractérisée en ce que**
la flexibilité des bras (18a, 18b) et/ou des nervures de connexion (22, 24) est réalisée de telle sorte que sous charge statique, la ligne de flexion des bras déviés (18a, 18b) présente avec la nervure de connexion extérieure (22) une allure en forme de S et la langue de soupape (20) reste toujours parallèle au siège de soupape (6).

5. Soupape à lamelle (2) selon l'une quelconque des revendications 1 à 4,
**caractérisée en ce que**
la masse et le moment de la langue (20) et des bras (18a, 18b) sont répartis de telle sorte que le centre d'inertie commun de la langue de soupape (20), de la nervure de connexion interne (24) et de la moitié des bras (18a, 18b) tournée vers la nervure de connexion interne (24) se situe verticalement au-dessus du centre de l'ouverture de soupape (14).

6. Soupape à lamelle (2) selon l'une quelconque des revendications 1 à 5,
**caractérisée en ce que**
la soupape à lamelle (2) est une soupape de décharge pour un compresseur.
